# EUROPEAN PATENT SPECIFICATION

(11) **EP 4 400 262 B1**
(45) Date of publication and mention of the grant of the patent: **11.11.2026**
(21) Application number: 23217272.6
(22) Date of filing: 15.12.2023
(51) Int. Cl.: B25C 1/06

(54) **POWERED FASTENING TOOL INCLUDING DRIVER DIRECTLY COUPLED TO ELECTRIC MOTOR**
ANGETRIEBENES BEFESTIGUNGSWERKZEUG MIT DIREKT AN EINEN ELEKTROMOTOR GEKOPPELTEM TREIBER
OUTIL DE FIXATION MOTORISÉ COMPRENANT UN DISPOSITIF D'ENTRAÎNEMENT COUPLÉ DIRECTEMENT À UN MOTEUR ÉLECTRIQUE

(30) Priority: 06.01.2023 US 202318094136
(43) Date of publication of application: 17.07.2024
(73) Proprietor: Black & Decker, Inc., New Britain, CT 06053 (US)
(72) Inventor: HEGARTY, Daniel, Baltimore, 21214 (US); JUSTIS, Michael, Towson, 21286 (US)
(74) Representative: Slingsby Partners LLP

(56) References cited:
- EP-A1- 2 230 050
- EP-A1- 2 976 549
- WO-A1-2022/011631
- US-A1- 2016 207 185
- US-A1- 2017 129 085

## Description

### FIELD

The present disclosure relates to powered fastening tools including a driver directly coupled to an electric motor.

### BACKGROUND

This section provides background information related to the present disclosure which is not necessarily prior art.

Different types of fastening tools are known, including portable pneumatically actuated devices, electrically actuated devices, hammer actuated devices, and manual actuated devices. Fastening tools, such as power nailers, have become relatively common place in the construction industry. Battery-powered nailers are popular in the market.

A common characteristic of all these types of fastening tools is the provision of a drive track, a fastener driving element mounted in the drive track and a magazine assembly for receiving a supply of fasteners in stick formation and feeding successive leading fasteners in the stick laterally into the drive track to be driven outwardly thereof by the fastener driving element.

Electrically powered fastening tools typically include a rotating flywheel that engages a driver to impart energy to the driver, causing the driver to move and drive or deform the fastener. Thus, a drive motor assembly can include an electric motor coupled to the flywheel (e.g., using a belt) to rotate the flywheel without engaging the driver. When activated, the drive motor assembly causes the rotating flywheel and driver to engage each other, which propels the driver from the home position to the extended position. In a cordless electric nailer, fasteners such as nails are driven into a workpiece by a driver blade or driver through a process known as a "drive" or "drive cycle". Generally, a drive cycle involves the driver striking a fastener head during a drive stroke to an extended position and returning to a home or retracted position during a return stroke. The structure of the drive motor assembly can result in changes in the attack angle or other changes that affect the efficiency with which the energy is transferred from the flywheel to the driver as the driver wears over the life of the tool.

Powered fastening tools typically include a driver return system that returns the drive to its home position in order to be ready for the following fastener drive action. The driver return system must be automatic, quick, durable, reliable, and be contained within the tool. Typically, the driver return system includes compression return springs mounted on guide rails along which the driver moves. These compression return springs are compressed during the drive stroke and operate to return the driver during the return stroke. Such compression return springs experience extremely high dynamic loading forces as the driver is accelerated and decelerated in driving a nail. Such high dynamic loading forces are highly detrimental to a desired long fatigue life of the springs. In addition, the room that is required along the drive rails to accommodate the compressed spring at the end of the drive stroke can limit the ability to shorten the length of the tool in the direction of the diver axis.

Powered fastening tools also typically include a driver retention system. Once the driver is returned to its home position, the driver retention system maintains the driver in its home position to be ready for the following fastener drive action. The driver retention system must retain the driver with sufficient force to prevent inadvertent movement of the driver out of its home position. Conversely, the force needed to move the driver into its home position must be sufficiently low to enable to the driver return system to accomplish that task and to minimize wear on the driver return systems.

Thus, the drive motor assembly, the driver return system, and the driver retention system include numerous components that add complexity and may adversely affect the reliability of powered fastening tools. In addition, these components may reduce the efficiency of converting electrical energy from a power source, such as a battery, into mechanical energy in the form of the driver moving along the guide rails. Accordingly, there remains a need to improve powered fastening tools to address the problems identified above and/or to address other problems of powered fastening tools.
EP2230050A1 discloses powered fastening tool according to the preamble of claim 1. The document describes a portable electric power tool, specifically directed to driving a fastener into a substrate as an electric motor driven nail gun. It has a bracket (20), switch, control unit (18), magazine (201) and nail push system, also a motor (1) which derives its power from a power supply (17) or rechargeable batteries. The motor drive uses a flywheel (9) as a speed reduction mechanism, a main characteristic is that the drive unit (11) of the driving mechanism is connected to a pitman (8) by a pin axis (112) on one end. The pitman is connected by the pin axis (85) to the driving block which does the arc movement. The end of the drive unit (11) is connected with a spring (12) to the long board (111) along the long slot in a sliding movement. The clutching mechanism of the speed reduction mechanism controls the anvil to do linear movement driven by the rotational motion of the flywheel. The clutch bar (6) of the driving mechanism has an outer bulge (61) and inner bulge (62), it controls the tension spring which makes the drive unit recover after impacting nails.

### SUMMARY

The invention provides a powered fastening tool according to independent claim 1. Optional features are defined in the dependent claims.

An example of a powered fastening tool includes an electric motor and a driver directly coupled to the electric motor. The electric motor is operable to move the driver from a home position to an extended position to discharge a fastener. In addition, the electric motor is operable to return the driver from the extended position to the home position.

In one example, the powered fastening tool further includes a rack and pinion mechanism that couples the driver to the electric motor.

In one example, the electric motor is an outrunner including a stator and an annular rotor disposed radially outward of the stator, and the rack and pinion mechanism includes teeth disposed on an outer perimeter of the annular rotor that engage teeth disposed on a mating surface of the driver.

In one example, the electric motor includes a stator and an annular rotor, and the driver is coupled to the electric motor via frictional contact between a mating surface of the driver and an outer radial surface of one of the annular rotor and a gearset coupling the driver to the electric motor.

In one example, the powered fastening tool further includes a slotted link mechanism that couples the driver to the electric motor.

In one example, the electric motor includes a stator and a rotor, and the slotted link mechanism includes a pin and a sliding yoke. The pin is attached to one of the rotor and the driver, and the sliding yoke is connected to the other one of the rotor and the driver. The sliding yoke has a slot that engages the pin on the rotor such that rotation of the rotor causes translation of the driver.

In one example, the sliding yoke and the driver are separate components.

In one example, the slot in the sliding yoke is configured such that rotation of the rotor causes translation of the driver only at specific degrees of rotation of the rotor.

In one example, the electric motor is an outrunner including a stator and a rotor disposed radially outward of the stator.

In one example, the stator includes an annular body, pole shoes projecting from an outer radial surface of the annular body, and coils wrapped around the pole shoes. In addition, the rotor includes an annular body and permanent magnets disposed on an inner radial surface thereof.

**The** powered fastening tool is free of any mechanism configured to decouple the driver from the electric motor.

In one example, the electric motor is an inrunner including a stator and a rotor disposed radially inward of the stator.

In one example, the powered fastening tool further includes a planetary gearset. The planetary gearset includes a sun gear, a plurality of planet gears, and a ring gear. The electric motor includes an output shaft that connects the rotor to the sun gear. The ring gear includes teeth disposed on an outer perimeter thereof that engage teeth disposed on a mating surface of the driver

**The** powered fastening tool according to **the** invention includes an electric motor, a driver, and a coupling mechanism. The coupling mechanism couples the driver to the electric motor such that rotation of the electric motor causes translation of the driver. The coupling mechanism permanently engages the driver with the electric motor when the powered fastening tool is assembled.

In one example, the electric motor is an outrunner including a stator and an annular rotor disposed radially outward of the stator, and the coupling mechanism is a rack and pinion mechanism. The rack and pinion mechanism includes teeth disposed on an outer perimeter of the annular rotor that engage teeth disposed on a mating surface of the driver.

In one example, the electric motor includes a stator and a rotor, and the coupling mechanism is a slotted link mechanism. The slotted link mechanism includes a pin and a sliding yoke. The pin is attached to one of the rotor and the driver, and the sliding yoke is connected to the other one of the rotor and the driver. The sliding yoke has a slot that engages the pin on the rotor.

In one example, the electric motor is an outrunner including a stator and a rotor disposed radially outward of the stator.

In one example, the stator includes an annular body, pole shoes projecting from an outer radial surface of the annular body, and coils wrapped around the pole shoes. In addition, the rotor includes an annular body and permanent magnets disposed on an inner radial surface thereof.

In one example, the coupling mechanism couples the driver to the electric motor such that rotation of the rotor causes translation of the driver only at specific degrees of rotation of the rotor.

Another example of a powered fastening tool includes an electric motor and a driver. The electric motor includes a stator and a rotor. The stator includes an annular body, pole shoes projecting from the annular body, and coils wrapped around the pole shoes. The rotor includes an annular body and permanent magnets disposed on the annular body of the rotor. The driver is directly driven by the rotor of the electric motor. The electric motor is operable to move the driver from a home position to an extended position to discharge a fastener. In addition, the electric motor is operable to return the driver from the extended position to the home position.

In one example, the powered fastening tool further includes a rack and pinion mechanism that couples the driver to the rotor of the electric motor.

In one example, the rotor is disposed radially outward of the stator, the pole shoes project from an outer radial surface of the annular body of the stator, the permanent magnets are disposed on an inner radial surface of the rotor, and the driver is coupled to the electric motor via frictional contact between an outer radial surface of the rotor and a mating surface of the driver.

In one example, the powered fastening tool further includes a slotted link mechanism that couples the driver to the rotor of the electric motor.

In one example, the slotted link mechanism includes a pin and a sliding yoke. The pin is attached to one of the rotor and the driver, and the sliding yoke is connected to the other one of the rotor and the driver. The sliding yoke has a slot that engages the pin on the rotor such that rotation of the rotor causes translation of the driver.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a side elevation view of an example of a powered fastening tool according to the present disclosure;
FIG. 2 is a schematic view of various components of the powered fastening tool of FIG. 1 including a rack and pinion mechanism directly coupling a driver to an electric motor, with the driver shown in a retracted or home position;
FIG. 3 is a schematic view similar to FIG. 2 with the driver shown in an extended position;
FIG. 4 is a schematic view of another example of a powered fastening tool according to the present disclosure including a driver directly coupled to an electric motor by frictional contact;
FIG. 5 is a schematic view of another example of a powered fastening tool according to the present disclosure including a slotted link mechanism directly coupling a driver to an electric motor;
FIG. 6 is a schematic view of another example of a powered fastening tool according to the present disclosure including another slotted link mechanism directly coupling a driver to an electric motor; and
FIG. 7 is a schematic view of another example of a powered fastening tool according to the present disclosure including a planetary gearset directly coupling a driver to an electric motor.

Corresponding reference numerals indicate corresponding parts throughout the several views of the drawings.

### DETAILED DESCRIPTION

A fastening tool according to the present disclosure includes a driver that is directly coupled to an electric motor, directly driven by the electric motor, and permanently engaged with the electric motor when the fastening tool is assembled. Thus, the fastening tool is free of any mechanism, such a clutch, which is configured to decouple or disengage the driver from the electric motor. As a result, the fastening tool transfers electrical energy into mechanical energy as directly as possible and is less complicated than powered fastening tools that include such a mechanism. In addition to being free of such a mechanism, the fastening tool is free of a driver return system and a driver retention system. In turn, the fastening tool is less complex than current powered fastening tools and has a reliability that is on par with the reliability of pneumatic fastening tools.

A conventional fastening tool includes an energy storage device, such as a flywheel, that stores kinetic energy from an electric motor until a fastener discharge, at which point a clutch is applied to engage a driver with the flywheel. In contrast, a fastening tool according to the present disclosure includes an electric motor that provides sufficient power to discharge a fastener without the need for an energy storage device such as a flywheel. As a result, the fastening tool does not require a mechanism, such a clutch, which is configured to decouple or disengage the driver from the electric motor.

In addition, in one example described herein, the fastening tool includes a coupling mechanism that couples the driver to the electric motor such that rotation of the rotor causes translation of the driver only at specific degrees of rotation of the rotor (e.g., 270 degrees of rotation of the rotor 34). Thus, the coupling mechanism may allow the electric motor to build up momentum before engaging the driver to discharge a fastener, which may reduce the size of the electric motor required to discharge a fastener. In addition, the driver may still be considered directly coupled to, driven by, and permanently engaged with the electric motor through the coupling mechanisms since no adjustment is made to the connection between the driver and the electric motor.

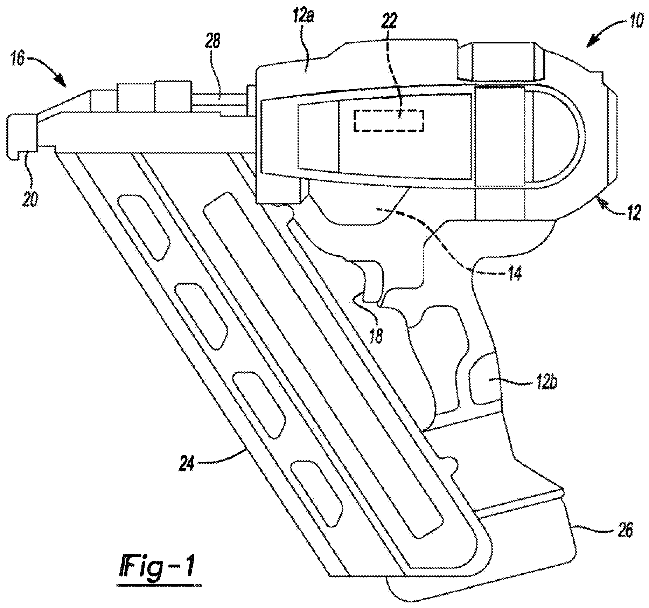

Referring now to FIG. 1, a fastening tool 10 according to the present disclosure includes a housing 12, a driver assembly 14, a nosepiece 16, a trigger 18, a contact trip 20, a control module 22, a magazine 24, and a battery 26. The battery 26 provides electrical power to the various sensors (which are discussed below) as well as to the driver assembly 14 and the control module 22. Those skilled in the art will appreciate from this disclosure, however, that in place of, or in addition to the battery 26, the fastening tool 10 may include an external power cord (not shown) for connection to an external power supply (not shown). Thus, the fastening tool 10 is electrically powered by a suitable electric power source or electric energy storage device, such as the battery 26.

The housing 12 includes a body portion 12a, which houses the driver assembly 14 and the control module 22, and a handle 12b. The handle 12b provides the housing 12 with a conventional pistol-grip appearance and may be unitarily formed with the body portion 12a or may be a discrete fabrication that is coupled to the body portion 12a, as by threaded fasteners (not shown). The handle 12b may be contoured so as to ergonomically fit a user's hand and/or may be equipped with a resilient and/or non-slip covering, such as an overmolded thermoplastic elastomer.

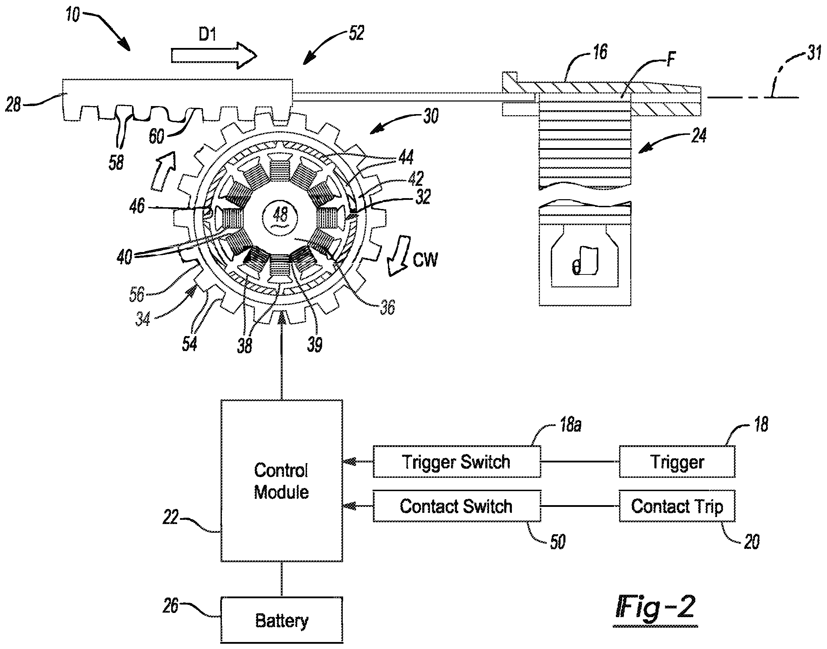

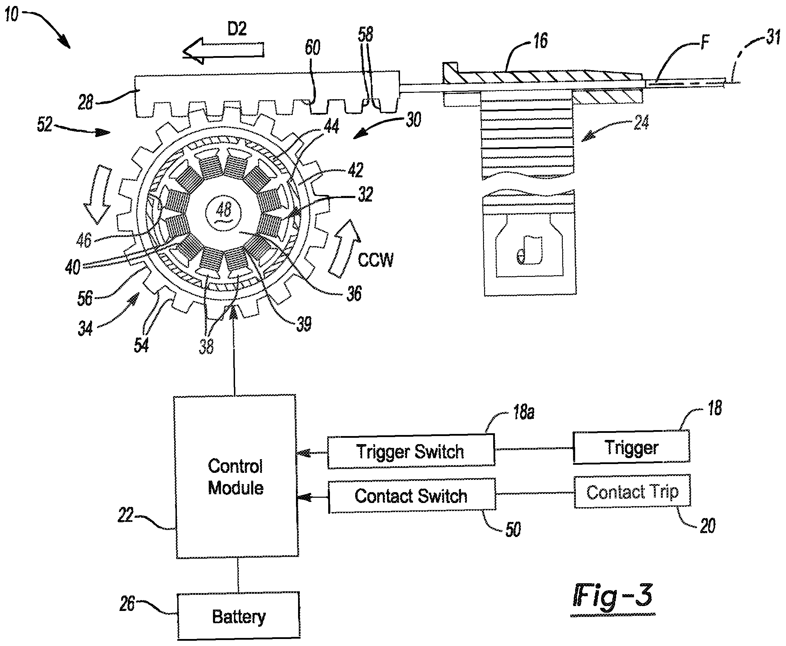

With additional reference to FIGS. 2 and 3, the driver assembly 14 includes a driver 28 and an electric motor 30 that is operable to translate the driver 28 along an axis 31 from a retracted or home position, shown in FIG. 2, to an extended position, shown in FIG. 3. The body portion 12a of the housing 12 and/or the nosepiece 16 guide(s) the driver 28 as it translates between its extended position and its home position.

The driver 28 is coupled to the electric motor 30 such that rotation of the electric motor 30 causes translation of the driver 28 along the axis 31. Rotation of the electric motor 30 in a clockwise direction CW causes translation of the driver 28 along the axis 31 in a first direction D1 toward its extended position. Rotation of the electric motor 30 in a counterclockwise direction CCW causes translation of the driver 28 along the axis 31 in a second direction D2 toward its home position.

The driver 28 is directly coupled to the electric motor 30, the driver 28 is directly driven by the electric motor 30, and the driver 28 is permanently engaged with the electric motor 30 when the fastening tool 10 is assembled. Thus, the fastening tool 10 is free of any mechanism, such a clutch, which is configured to decouple or disengage the driver 28 from the electric motor 30. As a result, the fastening tool 10 transfers electrical energy into mechanical energy as directly as possible and is less complicated than fastening tools that include such a mechanism. In addition, the fastening tool 10 has a reliability that is on par with the reliability of pneumatic fastening tools.

Although the driver 28 is directly coupled to, driven by, and permanently engaged with the electric motor 30, the driver 28 may be coupled to the electric motor 30 using a coupling mechanism such as a rack and pinion mechanism or a slotted link mechanism. In addition, the coupling mechanism may include one or more gears to adjust the speed ratio between the driver and the electric motor. Depending on the gear ratio, the electric motor 30 may or may not complete one full rotation to move the driver 28 from its home position to its extended position or vice versa.

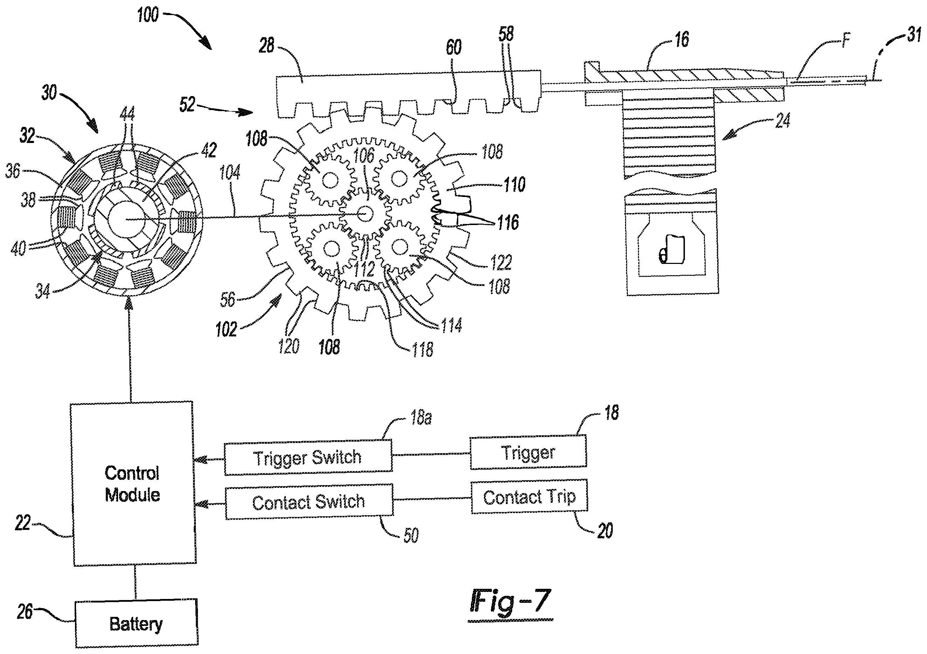

In the example shown in FIGS. 2 and 3, the electric motor 30 is an outrunner including a stator 32 and a rotor 34 disposed radially outward of the stator 32. However, in various implementations such as that shown in FIG. 7, the electric motor 30 may be an inrunner in which the rotor 34 is disposed radially inward of the stator 32. The stator 32 includes an annular body 36, pole shoes 38 projecting from an outer radial surface 39 of the annular body 36, and coils 40 wrapped around the pole shoes 38. The rotor 34 includes an annular body 42 and permanent magnets 44 disposed on an inner radial surface 46 of the annular body 42. The stator 32 is stationary and may be fixed to a shaft 48, which may be supported by and fixed to the body portion 12a of the housing 12. The rotor 34 may be coupled to the shaft 48 in a manner that allows the rotor 34 to rotate about the shaft 48. To activate the electric motor 30, the coils 40 of the stator 32 are sequentially energized to attract the permanent magnets 44 of the rotor 34 and thereby cause the rotor 34 to rotate. While the rotor 34 may be referred to as a flywheel, the rotor 34 is part of the electric motor 30 and therefore is not coupled to the electric motor 30 using, for example, a belt.

In various implementations, the fastening tool 10 may include a flywheel that is separate from the electric motor 30 and coupled to the electric motor using, for example, a belt. In such implementations, the driver 28 is directly coupled to, driven by, and permanently engaged with the flywheel. Thus, the fastening tool 10 is free of any mechanism, such a clutch, which is configured to decouple or disengage the driver 28 from the flywheel.

In the example shown in FIGS. 2 and 3, the fastening tool 10 includes a rack and pinion mechanism 52 that directly couples the driver 28 to the rotor 34 of the electric motor 30. The rack and pinion mechanism 52 includes teeth 54 disposed on an outer perimeter (or outer radial surface) 56 of the rotor 34 that engage teeth 58 disposed on a mating surface 60 of the driver 28, which may be a flat surface.

In operation, fasteners F are stored in the magazine 24, which sequentially feeds the fasteners F into the nosepiece 16. The control module 22 controls the electric motor 30 to translate the driver 28 and impact one of the fasteners F in the nosepiece 16 so that the fastener F may be driven from the nosepiece 16 and into a workpiece (not shown). Operation of the electric motor 30 utilizes electrical energy from the battery 26. The nosepiece 16 guides the fastener F as it is being driven into the workpiece.

The trigger 18 is coupled to the housing 12 and is configured to receive an input from the user, typically by way of the user's finger, which may be employed in conjunction with a trigger switch 18a to generate a trigger signal. The trigger signal may be employed in whole or in part to initiate the cycling of the fastening tool 10 to install the fastener F to the workpiece.

The contact trip 20 may be coupled to the nosepiece 16 for sliding movement thereon. The contact trip 20 is configured to slide rearwardly in response to contact with the workpiece and may interact either with the trigger 18 or a contact trip sensor or switch 50. In the former case, the contact trip 20 cooperates with the trigger 18 to permit the trigger 18 to actuate the trigger switch 18a to generate the trigger signal. More specifically, the trigger 18 may include a primary trigger, which is actuated by a finger of the user, and a secondary trigger, which is actuated by sufficient rearward movement of the contact trip 20. Actuation of either one of the primary and secondary triggers will not, in and of itself, cause the trigger switch 18a to generate the trigger signal. Rather, both the primary and the secondary trigger must be placed in an actuated condition to cause the trigger switch 18a to generate the trigger signal.

In the latter case (i.e., where the contact trip 20 interacts with the contact trip switch 50), which is employed in the example provided, rearward movement of the contact trip 20 by a sufficient, predetermined amount causes the contact trip switch 50 to generate a contact trip signal, which may be employed in conjunction with the trigger signal to initiate the cycling of the fastening tool 10 to install the fastener F to the workpiece. For example, the control module 22 may active the electric motor 30 to translate the driver 28 from its home position to its extended position, and thereby drive the fastener F into the workpiece, in response to the contact trip signal and the trigger signal.

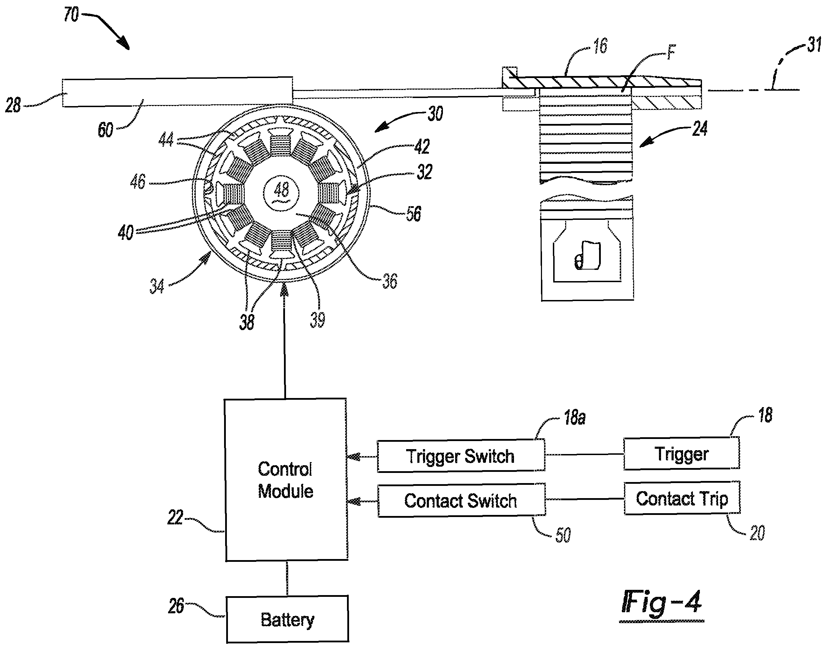

Referring now to FIG. 4, a fastening tool 70 is similar or identical to the fastening tool 10 except that in the fastening tool 70, the driver 28 is directly coupled to the electric motor 30 by frictional contact instead of the rack and pinion mechanism 52. More specifically, in the fastening tool 70, the driver 28 is directly coupled to the electric motor 30 by frictional contact between the outer radial surface 56 of the rotor 34 and the mating surface 60 of the driver 28. Thus, the fastening tool 70 does not include the rack and pinion mechanism 52. In various implementations, the mating surface 60 of the driver 28 may not be flat, and the profile of the mating surface 60 may be complementary to the profile of the outer radial surface 56 of the rotor 34 such that the mating surface 60 meshes with the outer radial surface 56.

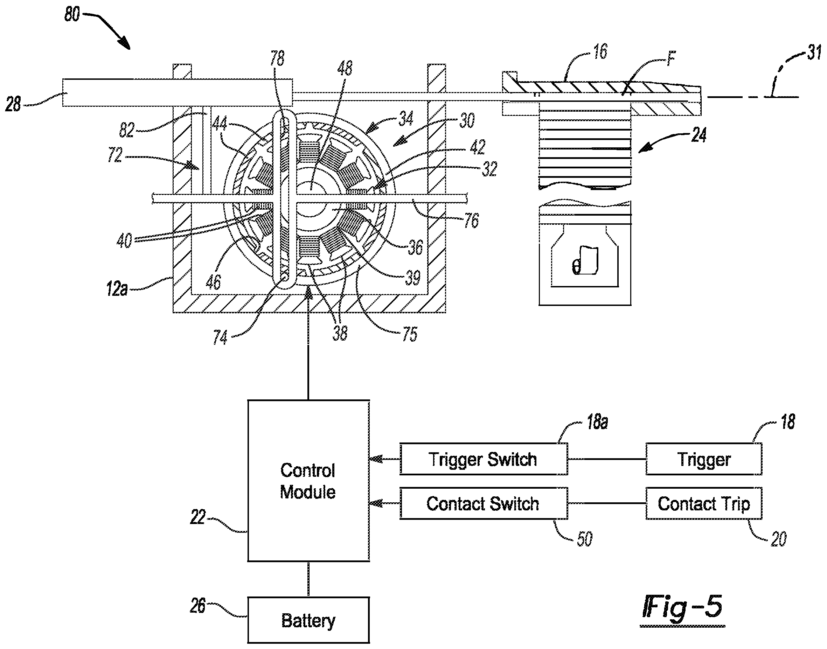

Referring now to FIG. 5, a fastening tool 80 is similar or identical to the fastening tool 10 except that in the fastening tool 80, the driver 28 is directly coupled to the electric motor 30 via a slotted link mechanism 72 instead of the rack and pinion mechanism 52. The slotted link mechanism 72 includes a pin 74 attached to a side surface or edge 75 of the rotor 34 and a sliding yoke 76 connected to the driver 28. The sliding yoke 76 has a slot 78 that engages the pin 74 on the rotor 34 such that rotation of the rotor 34 causes translation of the driver 28. In the example shown, the sliding yoke 76 and the driver 28 are separate components and are connected to one another by a rigid link 82. However, in various implementations, the sliding yoke 76 and the driver 28 may be formed together as a single component. Also, in various implementations, the pin 74 may be disposed on the driver 28 instead of the rotor 34, and the sliding yoke 76 may be connected to the rotor 34 instead of the driver 28.

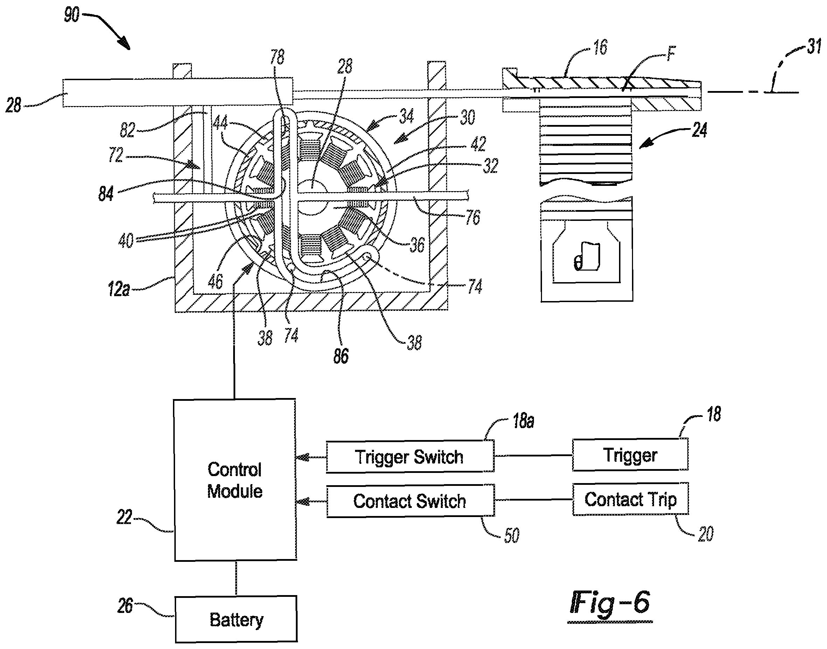

Referring now to FIG. 6, a fastening tool 90 is similar or identical to the fastening tool 80 except that in the fastening tool 80, the slot 78 has a linear shape, whereas in the fastening tool 90, the slot 78 has a J-shape and includes a straight portion 84 and a curved portion 86. The curved portion 86 of the slot 78 may have the same radius of curvature as the rotor 34.

When the pin 74 on the rotor 34 is positioned within the straight portion 84 of the slot 78 in the sliding yoke 76, rotation of the rotor 34 causes translation of the driver 28. When the pin 74 on the rotor 34 is positioned within the curved portion 86 of the slot 78 in the sliding yoke 76, rotation of the rotor 34 does not cause translation of the driver 28. Thus, rotation of the rotor 34 results in translation of the driver 28 only at specific degrees of rotation of the rotor 34 (i.e., less than one full rotation of the rotor 34).

In the example shown in FIG. 6, there is only one pin 74 on the rotor 34, and the pin 74 is shown at two different positions. The pin 74 is represented using a phantom line when the pin 74 is at a first position. The pin 74 is represented using a solid line when the pin 74 is at a second position. As the pin 74 moves from the first position to the second position due to rotation of the rotor 34, rotation of the rotor 34 does not cause translation of the driver 28. In various implementations where the driver 28 is directly coupled to the electric motor 30 via the slotted link mechanism 72 such as those shown in FIGS. 5 and 6, the electric motor 30 may be an inrunner. In one example, the rotor 34 rotates the pin 74 from the first position to the second position when the electric motor 30 is initially activated such that the electric motor 30 rotates through a certain number of degrees before initiating translation of the driver 28. Thus, the slotted link mechanism 72 allows the electric motor 30 to build up momentum before engaging the driver 28 to drive the fastener F, which enables reducing the size of the electric motor 30 while achieving the same fastener driving performance.

Referring now to FIG. 7, a fastening tool 100 is similar or identical to the fastening tool 10 except that the electric motor 30 is an inrunner and the driver 28 is directly coupled to the electric motor 30 through a planetary gearset 102. The electric motor 30 includes an output shaft 104. The planetary gearset 102 includes a sun gear 106, four planet gears 108, and a ring gear 110. The sun gear 106 includes teeth 112 that engage teeth 114 on the planet gears 108.

The ring gear 110 includes teeth 116 on an inner diameter 118 of the ring gear 110 and teeth 120 on an outer diameter 122 of the ring gear 110. The teeth 116 on the inner diameter 118 of the ring gear 110 engage the teeth 114 on the planet gears 108. The teeth 120 on the outer diameter 122 of the ring gear 110 engage the teeth 58 on the mating surface 60 of the driver 28.

The output shaft 104 of the electric motor 30 connects the rotor 34 of the electric motor 30 to the sun gear 106 of the planetary gearset 102. Thus, the sun gear 106 is driven by the output shaft 104. For ease of illustration, the electric motor 30 and the planetary gearset 102 are shown spaced apart from one another in a left-right direction as viewed in FIG. 7, and therefore the output shaft 104 extends in the left-right direction. However, in various implementations, the electric motor 30 and the planetary gearset 102 may be spaced apart from one another in a direction extending into and out of the page as viewed in FIG. 7, and therefore the output shaft 104 may extend in the same direction.

When the electric motor 30 is activated, the rotor 34 of the electric motor 30 rotates and thereby causes the sun gear 106 of the planetary gearset 102 to rotate. Rotation of the sun gear 106 in one direction causes rotation of the planet gears 108 in the opposite direction, which causes the ring gear 110 to rotate in the same direction as the sun gear 106. Rotation of the ring gear 110 causes translation of the driver 28 due to the engagement between the teeth 120 on the ring gear 110 and the teeth 58 on the driver 28. Thus, the teeth 120 on the ring gear 110 and the teeth 58 on the driver 28 form a rack and pinion mechanism that couples the driver 28 to the electric motor 30.

In various implementations, when the driver 28 is directly coupled to the electric motor 30 through the planetary gearset 102, the teeth 120 on the ring gear 110 and the teeth 58 on the driver 28 may be omitted. Thus, the driver 28 may be directly coupled to the electric motor 30 by frictional contact between the outer diameter (or outer radial surface) 122 of the ring gear 110 and the mating surface 60 of the driver 28. Additionally or alternatively, the planetary gearset 102 may be replaced by a different transmission or gear arrangement, such as a single gear, which has an outer radial surface in frictional contact with the mating surface 60 of the driver 28.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

As used herein, the phrase at least one of A, B, and C should be construed to mean a logical (A OR B OR C), using a non-exclusive logical OR, and should not be construed to mean "at least one of A, at least one of B, and at least one of C." As used herein, the term "and/or" includes any and all combinations of one or more of the associated listed items.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks, flowchart components, and other elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation) (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Swift, Haskell, Go, SQL, R, Lisp, Java^{®}, Fortran, Perl, Pascal, Curl, OCaml, Javascript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

## Claims

1. A powered fastening tool (10, 70, 80, 90, 100) comprising:
an electric motor (30);
a driver (28); and
a coupling mechanism (52, 72, 102) that couples the driver (28) to the electric motor (30) such that rotation of the electric motor (30) causes translation of the driver (28), **characterized in that** the coupling mechanism (52, 72, 102) permanently engages the driver (28) with the electric motor (30) when the powered fastening tool is assembled.

2. The powered fastening tool (10, 70, 80, 90, 100) of claim 1 wherein the electric motor (30) is operable to:
move the driver (28) from a home position to an extended position to discharge a fastener (F); and
return the driver (28) from the extended position to the home position.

3. The powered fastening tool (10) of claim 1 or claim 2 wherein:
the electric motor (30) is an outrunner including a stator (32) and an annular rotor (34) disposed radially outward of the stator (32); and
the coupling mechanism is a rack and pinion mechanism (52) including teeth (54) disposed on an outer perimeter (56) of the annular rotor (34) that engage teeth (58) disposed on a mating surface (60) of the driver (28).

4. The powered fastening tool (10) of claim 1 or claim 2 wherein the coupling mechanism comprises a rack and pinion mechanism (52).

5. The powered fastening tool (70) of claim 1 or claim 2 wherein:
the electric motor (30) includes a stator (32) and an annular rotor (34); and
the driver (28) is coupled to the electric motor (30) via frictional contact between a mating surface (60) of the driver (28) and an outer radial surface (56) of one of the annular rotor (34) and a gearset coupling the driver (28) to the electric motor (30).

6. The powered fastening tool (80, 90) of claim 1 or claim 2 wherein:
the electric motor (30) includes a stator (32) and a rotor (34); and
the coupling mechanism is a slotted link mechanism (72) including a pin (74) and a sliding yoke (76), wherein the pin (74) is attached to one of the rotor (34) and the driver (28), and the sliding yoke (76) is connected to the other one of the rotor (34) and the driver (28), the sliding yoke (76) having a slot (78) that engages the pin (74).

7. The powered fastening tool (10, 70, 80, 90, 100) of any of claims 1, 2 or 4 wherein the electric motor (30) is an outrunner including a stator (32) and a rotor (34) disposed radially outward of the stator (32), optionally wherein:
the stator (32) includes an annular body (36), pole shoes (38) projecting from an outer radial surface (39) of the annular body (36), and coils (40) wrapped around the pole shoes (38); and
the rotor (34) includes an annular body (42) and permanent magnets (44) disposed on an inner radial surface (46) thereof.

8. The powered fastening tool (10) of claim 3 wherein the stator (32) includes an annular body (36), pole shoes (38) projecting from an outer radial surface (39) of the annular body (36), and coils (40) wrapped around the pole shoes (38); and
the rotor (34) includes an annular body (42) and permanent magnets (44) disposed on an inner radial surface (46) thereof.

9. The powered fastening tool (70, 80, 90) of claim 5 or claim 6 wherein the stator (32) includes an annular body (36), pole shoes (38) projecting from an outer radial surface (39) of the annular body (36), and coils (40) wrapped around the pole shoes (38); and
the rotor (34) includes an annular body (42) and permanent magnets (44) disposed on an inner radial surface (46) thereof.

10. The powered fastening tool (10, 70, 80, 90, 100) of claim 1 or claim 2 wherein the coupling mechanism (52, 72, 102) comprises at least one gear that couples the driver to a rotor of the electric motor.

11. The powered fastening tool (100) of claim 1 or claim 2 wherein the electric motor (30) is an inrunner including a stator (32) and a rotor (34) disposed radially inward of the stator (32), optionally further comprising a planetary gearset (102) including a sun gear (106), a plurality of planet gears (108), and a ring gear (110), wherein:
the electric motor (30) includes an output shaft (104) that connects the rotor (34) to the sun gear (106); and
the ring gear (110) includes teeth (120) disposed on an outer perimeter (122) thereof that engage teeth (58) disposed on a mating surface (60) of the driver (28).

12. The powered fastening tool (80, 90) of any of claims 1, 2 and 6 wherein the coupling mechanism (72) couples the driver (28) to the electric motor (30) such that rotation of the motor (30) causes translation of the driver (28) only at specific degrees of rotation of the motor (30).

## Patentansprüche

1. Angetriebenes Befestigungswerkzeug (10, 70, 80, 90, 100), umfassend:
einen Elektromotor (30);
einen Treiber (28); und
einen Kopplungsmechanismus (52, 72, 102), der den Treiber (28) an den Elektromotor (30) koppelt, sodass eine Drehung des Elektromotors (30) eine Translation des Treibers (28) bewirkt, **dadurch gekennzeichnet, dass** der Kopplungsmechanismus (52, 72, 102) den Treiber (28) permanent mit dem Elektromotor (30) in Eingriff bringt, wenn das angetriebene Befestigungswerkzeug zusammengebaut ist.

2. Angetriebenes Befestigungswerkzeug (10, 70, 80, 90, 100) nach Anspruch 1, wobei der Elektromotor (30) betreibbar ist zum:
Bewegen des Treibers (28) von einer Ausgangsposition in eine ausgefahrene Position, um ein Befestigungselement (F) auszutragen; und
Zurückführen des Treibers (28) von der ausgefahrenen Position in die Ausgangsposition.

3. Angetriebenes Befestigungswerkzeug (10) nach Anspruch 1 oder Anspruch 2, wobei:
der Elektromotor (30) ein Außenläufer ist, der einen Stator (32) und einen ringförmigen Rotor (34), der radial außerhalb des Stators (32) angeordnet ist, beinhaltet; und
der Kopplungsmechanismus ein Zahnstangenmechanismus (52) ist, der Zähne (54) beinhaltet, die auf einem Außenumfang (56) des ringförmigen Rotors (34) angeordnet sind, die in Zähne (58) eingreifen, die auf einer Gegenfläche (60) des Treibers (28) angeordnet sind.

4. Angetriebenes Befestigungswerkzeug (10) nach Anspruch 1 oder Anspruch 2, wobei der Kopplungsmechanismus einen Zahnstangenmechanismus (52) umfasst.

5. Angetriebenes Befestigungswerkzeug (70) nach Anspruch 1 oder Anspruch 2, wobei:
der Elektromotor (30) einen Stator (32) und einen ringförmigen Rotor (34) beinhaltet; und
der Treiber (28) mittels Reibungskontakt zwischen einer Gegenfläche (60) des Treibers (28) und einer äußeren radialen Fläche (56) eines von dem ringförmigen Rotor (34) und einem Radsatz, der den Treiber (28) an den Elektromotor (30) koppelt, an den Elektromotor (30) gekoppelt ist.

6. Angetriebenes Befestigungswerkzeug (80, 90) nach Anspruch 1 oder Anspruch 2, wobei:
der Elektromotor (30) einen Stator (32) und einen Rotor (34) beinhaltet; und
der Kopplungsmechanismus ein Schlitzverbindungsmechanismus (72) ist, der einen Stift (74) und ein Gleitjoch (76) beinhaltet, wobei der Stift (74) an einem von dem Rotor (34) und dem Treiber (28) angebracht ist und das Gleitjoch (76) mit dem anderen von dem Rotor (34) und dem Treiber (28) verbunden ist, wobei das Gleitjoch (76) einen Schlitz (78) aufweist, der in den Stift (74) eingreift.

7. Angetriebenes Befestigungswerkzeug (10, 70, 80, 90, 100) nach einem der Ansprüche 1, 2 oder 4, wobei der Elektromotor (30) ein Außenläufer ist, der einen Stator (32) und einen Rotor (34), der radial außerhalb des Stators (32) angeordnet ist, beinhaltet, wobei optional:
der Stator (32) einen ringförmigen Körper (36), Polschuhe (38), die von einer äußeren radialen Fläche (39) des ringförmigen Körpers (36) vorstehen, und Spulen (40), die um die Polschuhe (38) gewickelt sind, beinhaltet; und
der Rotor (34) einen ringförmigen Körper (42) und Permanentmagnete (44), die auf einer inneren radialen Fläche (46) davon angeordnet sind, beinhaltet.

8. Angetriebenes Befestigungswerkzeug (10) nach Anspruch 3, wobei der Stator (32) einen ringförmigen Körper (36), Polschuhe (38), die von einer äußeren radialen Fläche (39) des ringförmigen Körpers (36) vorstehen, und Spulen (40), die um die Polschuhe (38) gewickelt sind, beinhaltet; und
der Rotor (34) einen ringförmigen Körper (42) und Permanentmagnete (44), die auf einer inneren radialen Fläche (46) davon angeordnet sind, beinhaltet.

9. Angetriebenes Befestigungswerkzeug (70, 80, 90) nach Anspruch 5 oder Anspruch 6, wobei der Stator (32) einen ringförmigen Körper (36), Polschuhe (38), die von einer äußeren radialen Fläche (39) des ringförmigen Körpers (36) vorstehen, und Spulen (40), die um die Polschuhe (38) gewickelt sind, beinhaltet; und
der Rotor (34) einen ringförmigen Körper (42) und Permanentmagnete (44), die auf einer inneren radialen Fläche (46) davon angeordnet sind, beinhaltet.

10. Angetriebenes Befestigungswerkzeug (10, 70, 80, 90, 100) nach Anspruch 1 oder Anspruch 2, wobei der Kopplungsmechanismus (52, 72, 102) mindestens ein Rad umfasst, das den Treiber an einen Rotor des Elektromotors koppelt.

11. Angetriebenes Befestigungswerkzeug (100) nach Anspruch 1 oder Anspruch 2, wobei der Elektromotor (30) ein Innenläufer ist, der einen Stator (32) und einen Rotor (34), der radial innerhalb des Stators (32) angeordnet ist, beinhaltet, optional ferner umfassend einen Planetenradsatz (102), der ein Sonnenrad (106), eine Vielzahl von Planetenrädern (108) und ein Ringrad (110) beinhaltet, wobei:
der Elektromotor (30) eine Abtriebswelle (104) beinhaltet, die den Rotor (34) mit dem Sonnenrad (106) verbindet; und
das Ringrad (110) Zähne (120) beinhaltet, die auf einem Außenumfang (122) davon angeordnet sind, die in Zähne (58) eingreifen, die auf einer Gegenfläche (60) des Treibers (28) angeordnet sind.

12. Angetriebenes Befestigungswerkzeug (80, 90) nach einem der Ansprüche 1, 2 und 6, wobei der Kopplungsmechanismus (72) den Treiber (28) an den Elektromotor (30) koppelt, sodass eine Drehung des Motors (30) eine Translation des Treibers (28) nur bei spezifischen Drehungsgraden des Motors (30) bewirkt.

## Revendications

1. Outil de fixation motorisé (10, 70, 80, 90, 100) comprenant :
un moteur électrique (30) ;
un dispositif d'entraînement (28) ; et
un mécanisme de couplage (52, 72, 102) qui couple le dispositif d'entraînement (28) au moteur électrique (30) de sorte que la rotation du moteur électrique (30) provoque la translation du dispositif d'entraînement (28), **caractérisé en ce que** le mécanisme de couplage (52, 72, 102) met en prise de manière permanente le dispositif d'entraînement (28) avec le moteur électrique (30) lorsque l'outil de fixation motorisé est assemblé.

2. Outil de fixation motorisé (10, 70, 80, 90, 100) selon la revendication 1, dans lequel le moteur électrique (30) est apte à :
déplacer le dispositif d'entraînement (28) d'une position de départ à une position déployée pour décharger une fixation (F) ; et
ramener le dispositif d'entraînement (28) de la position déployée à la position de départ.

3. Outil de fixation motorisé (10) selon la revendication 1 ou la revendication 2, dans lequel :
le moteur électrique (30) est un moteur à rotor extérieur comprenant un stator (32) et un rotor annulaire (34) disposé radialement à l'extérieur du stator (32) ; et
le mécanisme de couplage est un mécanisme à crémaillère et pignon (52) comprenant des dents (54) disposées sur un périmètre extérieure (56) du rotor annulaire (34) qui viennent en prise avec des dents (58) disposées sur une surface d'accouplement (60) du dispositif d'entraînement (28).

4. Outil de fixation motorisé (10) selon la revendication 1 ou la revendication 2, dans lequel le mécanisme de couplage comprend un mécanisme à crémaillère et pignon (52).

5. Outil de fixation motorisé (70) selon la revendication 1 ou la revendication 2, dans lequel :
le moteur électrique (30) comprend un stator (32) et un rotor annulaire (34) ; et
le dispositif d'entraînement (28) est couplé au moteur électrique (30) par l'intermédiaire d'un contact par frottement entre une surface d'accouplement (60) du dispositif d'entraînement (28) et une surface radiale extérieure (56) de l'un du rotor annulaire (34) et d'un train d'engrenages couplant le dispositif d'entraînement (28) au moteur électrique (30).

6. Outil de fixation motorisé (80, 90) selon la revendication 1 ou la revendication 2, dans lequel :
le moteur électrique (30) comprend un stator (32) et un rotor (34) ; et
le mécanisme de couplage est un mécanisme de liaison à fente (72) comprenant une broche (74) et une culasse coulissante (76), dans lequel la broche (74) est fixée à l'un du rotor (34) et du dispositif d'entraînement (28), et la culasse coulissante (76) est raccordée à l'autre du rotor (34) et du dispositif d'entraînement (28), la culasse coulissante (76) ayant une fente (78) qui vient en prise avec la broche (74).

7. Outil de fixation motorisé (10, 70, 80, 90, 100) selon l'une quelconque des revendications 1, 2 ou 4, dans lequel le moteur électrique (30) est un moteur à rotor extérieur comprenant un stator (32) et un rotor (34) disposé radialement à l'extérieur du stator (32), facultativement dans lequel :
le stator (32) comprend un corps annulaire (36), des pièces polaires (38) faisant saillie d'une surface radiale extérieure (39) du corps annulaire (36), et des bobines (40) enroulées autour des pièces polaires (38) ; et
le rotor (34) comprend un corps annulaire (42) et des aimants permanents (44) disposés sur une surface radiale intérieure (46) de celui-ci.

8. Outil de fixation motorisé (10) selon la revendication 3, dans lequel le stator (32) comprend un corps annulaire (36), des pièces polaires (38) faisant saillie d'une surface radiale extérieure (39) du corps annulaire (36), et des bobines (40) enroulées autour des pièces polaires (38) ; et
le rotor (34) comprend un corps annulaire (42) et des aimants permanents (44) disposés sur une surface radiale intérieure (46) de celui-ci.

9. Outil de fixation motorisé (70, 80, 90) selon la revendication 5 ou la revendication 6, dans lequel le stator (32) comprend un corps annulaire (36), des pièces polaires (38) faisant saillie d'une surface radiale extérieure (39) du corps annulaire (36), et des bobines (40) enroulées autour des pièces polaires (38) ; et
le rotor (34) comprend un corps annulaire (42) et des aimants permanents (44) disposés sur une surface radiale intérieure (46) de celui-ci.

10. Outil de fixation motorisé (10, 70, 80, 90, 100) selon la revendication 1 ou la revendication 2, dans lequel le mécanisme de couplage (52, 72, 102) comprend au moins un engrenage qui couple le dispositif d'entraînement à un rotor du moteur électrique.

11. Outil de fixation motorisé (100) selon la revendication 1 ou la revendication 2, dans lequel le moteur électrique (30) est un moteur à rotor intérieur comprenant un stator (32) et un rotor (34) disposé radialement à l'intérieur du stator (32), comprenant en outre facultativement un train d'engrenages planétaires (102) comprenant un engrenage solaire (106), une pluralité de satellites (108) et une couronne dentée (110), dans lequel :
le moteur électrique (30) comprend un arbre de sortie (104) qui raccorde le rotor (34) au planétaire (106) ; et
la couronne dentée (110) comprend des dents (120) disposées sur un périmètre extérieur (122) de celle-ci qui viennent en prise avec des dents (58) disposées sur une surface d'accouplement (60) du dispositif d'entraînement (28).

12. Outil de fixation motorisé (80, 90) selon l'une quelconque des revendications 1, 2 et 6, dans lequel le mécanisme de liaison (72) couple le dispositif d'entraînement (28) au moteur électrique (30) de sorte que la rotation du moteur (30) provoque la translation du dispositif d'entraînement (28) uniquement à des degrés spécifiques de rotation du moteur (30).
